# FASCICULE DE BREVET EUROPEEN

(11) **EP 0 417 261 B1**
(45) Date de publication et mention de la délivrance du brevet: **17.08.1994**
(21) Numéro de dépôt: 90906250.7
(22) Date de dépôt: 28.03.1990
(51) Int. Cl.: G11B 5/39

(54) **TETE MAGNETIQUE A MAGNETORESISTANCE POUR ENREGISTREMENT LONGITUDINAL ET PROCEDE DE REALISATION D'UNE TELLE TETE**
MAGNETKOPF MIT MAGNETOWIDERSTAND FÜR LONGITUDINALE AUFZEICHNUNG UND HERSTELLUNGSVERFAHREN EINES DERARTIGEN KOPFES
MAGNETORESISTANT MAGNETIC HEAD FOR THE LONGITUDINAL RECORDING AND METHOD FOR MAKING THE SAME

(30) Priorité: 29.03.1989 FR 8904060
(43) Date de publication de la demande: 20.03.1991
(73) Titulaire: COMMISSARIAT A L'ENERGIE ATOMIQUE, 75015 Paris (FR)
(72) Inventeur: LAZZARI, Jean-Pierre, F-38700 Corenc (FR)
(74) Mandataire: Signore, Robert
(86) Numéro de dépôt international: FR9000213
(87) Numéro de publication internationale: WO9011597

(56) Documents cités:
- EP-A- 0 023 175
- EP-A- 0 238 110
- PATENT ABSTRACTS OF JAPAN, vol. 1, no. 76, 21 juillet 1977, page 1039 E 77;& JP-A-52011921
- PATENT ABSTRACTS OF JAPAN, vol. 7, no. 42 (P-177)(1187), 19 février 1983;& JP-A-57191819
- PATENT ABSTRACTS OF JAPAN, vol. 9, no. 2 (P-325)(1725). 8 janvier 1985;& JP-A-59151334
- PATENT ABSTRACTS OF JAPAN, vol. 6, no. 22 (P-101)(900), 9 février 1982;& JP-A-56143514
- PATENT ABSTRACTS OF JAPAN, vol. 11, no. 303 (P-622)(2750), 3 ocotbre 1987;& JP-A-62095711
- IEEE TRANSACTIONS ON MAGNETICS, vol. 25, no. 5, septembre 1989, New York, NY, US; pages 3686-3688; D.W.CHAPMAN: "A new approach to making thin film head-slider devices"

## Description

La présente invention a pour objet une tête magnétique de lecture et éventuellement d'écriture à magnétorésistance pour enregistrement longitudinal et un procédé de réalisation d'une telle tête.

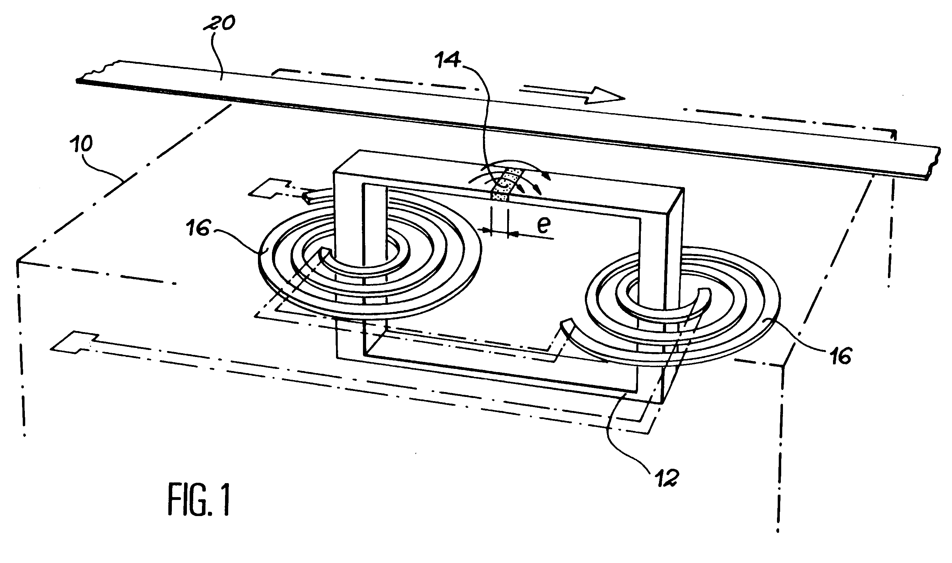

La structure d'une tête d'écriture et de lecture pour enregistrement longitudinal est rappelée figure 1. Dans un substrat semi-conducteur 10 sont déposées et gravées diverses couches (dont les dimensions relatives n'ont pas été respectées pour plus de clarté) pour former un circuit magnétique 12 avec entrefer comblé par un espaceur amagnétique 14 et un bobinage conducteur 16. La piste à écrire et/ou à lire 20 défile au-dessus de l'entrefer.

De telles têtes sont décrites, sous des modes de réalisation divers, dans les documents de brevets européens EP-A-152 326 et EP-A-262 028 (ou son correspondant américain US-A-4,837,924).

A côté de cette technologie connue en couches minces s'est développée une technique utilisant les propriétés des matériaux magnétorésistants. De tels matériaux permettent de réaliser des têtes de lecture pour pistes d'enregistrement très étroites.

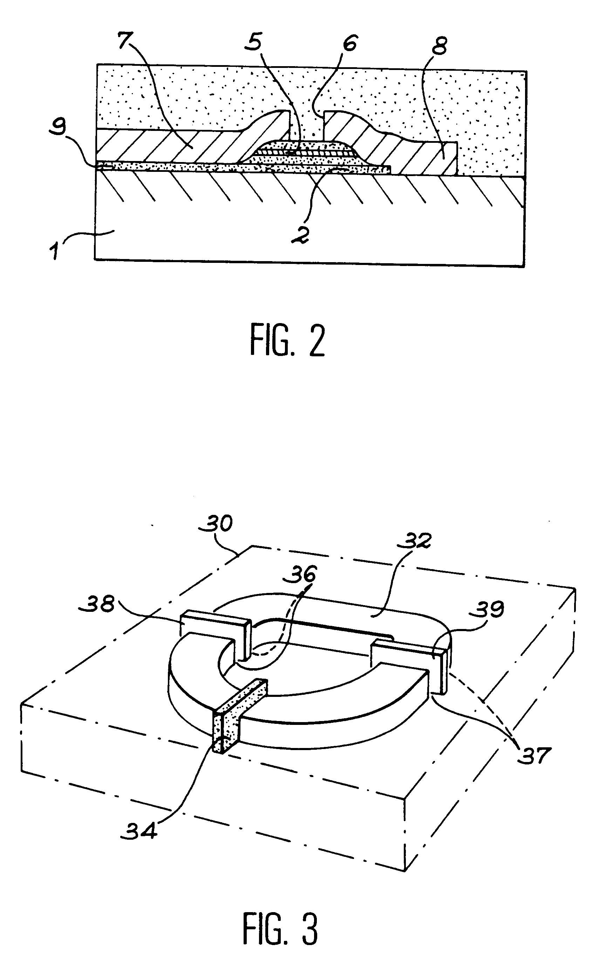

La figure 2 montre une tête de ce genre comprenant un support magnétique 1 revêtu d'une couche isolante 2, une couche magnétorésistante 5 disposée sous une fente 6 percée dans une couche magnétique 7. Cette dernière est en contact avec le support 1 par une zone arrière 8. Les couches 1, 7, 8 constituent ainsi un circuit magnétique avec entrefer 9, ce circuit étant interrompu par la fente 6. Lorsqu'une piste enregistrée passe devant l'entrefer 9, le flux magnétique capté au niveau de l'entrefer passe en partie par la magnétorésistance 5 dont la résistance se trouve ainsi modifiée.

Une telle tête est décrite dans le document de brevet américain US-A-4,703,378.

La figure 3 montre une autre tête connue utilisant des magnétorésistances.

Un support semi-conducteur 30 a été déposé sur un circuit magnétique 32 avec un espaceur 34. Deux fentes 36, 37 interrompent le circuit magnétique et servent à loger deux magnétorésistances 38 et 39.

Une telle tête est décrite dans le document de brevet européen EP-A-284 495.

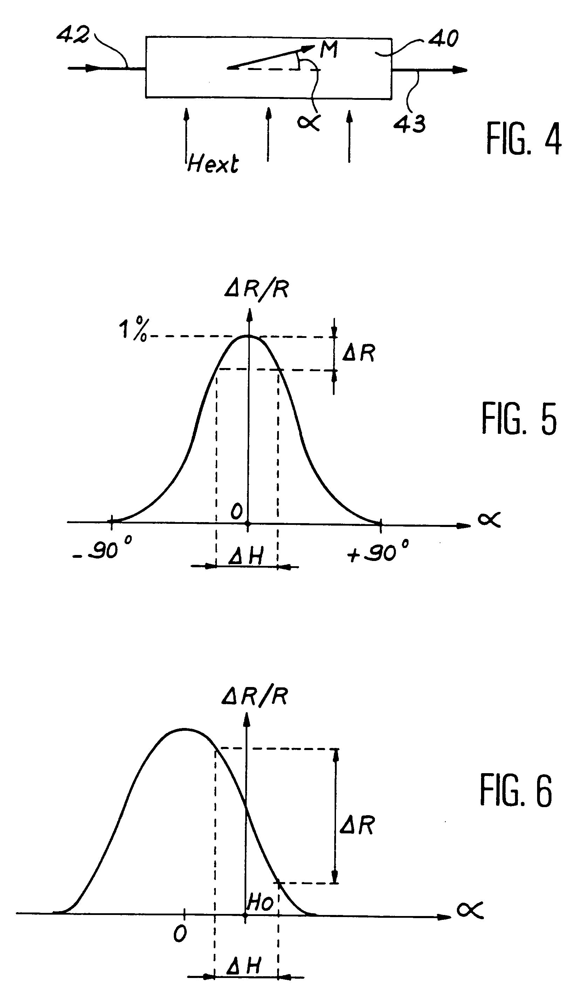

Tous ces dispositifs à magnétorésistance fonctionnent selon un principe général pouvant être illustré par les figures 4, 5 et 6.

Sur la figure 4, on voit une magnétorésistance 40 présentant un vecteur aimantation M qui, sous l'effet d'un champ magnétique extérieur Hext, tourne d'un angle α. La résistance de l'élément 40 s'en trouve modifiée. Cette résistance peut être mesurée électriquement à travers deux connexions 42, 43.

La variation de résistance ΔR, rapportée à la résistance R, varie comme indiqué sur la figure 5 en fonction de l'angle α. En pratique, pour une couche de fer-nickel d'épaisseur 0,1 µm, la résistance relative varie d'environ 1% lorsque l'aimantation tourne de 90°.

Pour augmenter la sensibilité de la mesure et améliorer la linéarité, on oriente l'aimantation de la couche à 45° pour pouvoir travailler sur le flanc de la courbe, comme le montre la figure 6. On obtient alors un plus grand ΔR pour un même ΔH, l'aimantation M tournant par rapport à cette direction à 45°.

Si ces dispositifs de l'art antérieur donnent satisfaction à certains égards, ils présentent néanmoins certains inconvénients. En particulier, ils sont complexes dans leur réalisation, notamment lorsqu'il s'agit de placer la magnétorésistance sous ou dans la fente du circuit magnétique.

La présente invention a pour but de remédier à cet inconvénient en proposant un dispositif et un procédé tels que la magnétorésistance se trouve être automatiquement disposée là où elle doit se trouver ("autoalignement").

EP-A-23175 divulque une tête unique assumant l'enregistrement et la lecture. Un élément magnéto-résistant est placé dans le champ arrière de l'entrefer de la tête. La tête n'est pas realisée en technologie dite en couches minces.

Dans les dispositifs antérieurs à magnétorésistance, il est difficile d'obtenir en même temps la fonction d'écriture. On préfère donc utiliser une autre tête, sans magnétorésistance celle-là, pour assurer l'écriture sur la piste. Ces dispositifs sont dits "à têtes duales".

Naturellement, leur complexité est considérable puisqu'il faut réaliser deux têtes et que celles-ci doivent être rigoureusement alignées. Dans le cas d'une piste courbe, cet alignement pose des problèmes considérables, de sorte que les têtes duales ne sont pratiquement utilisées que pour les dérouleurs de bande.

Avec la présente invention, il est possible de réaliser en une seule et même tête, à la fois des moyens de lecture et des moyens d'écriture, tout en préservant l'autoalignement de ces moyens. Mais la tête de l'invention peut fort bien n'être qu'une tête de lecture.

Enfin, l'invention apporte un avantage supplémentaire en ce sens que l'élément magnétorésistant présente une longueur inférieure à celle de l'entrefer d'écriture, de sorte que la lecture s'effectue sur une largeur de piste inférieure à celle de la piste totale. Cette disposition permet d'améliorer le rapport signal sur bruit à la lecture.

De façon plus précise, la présente invention a pour objet une tête magnétique de lecture et éventuellement d'écriture de type horizontal comprenant un circuit magnétique composé d'une couche magnétique inférieure horizontale prolongée par deux plots verticaux, une couche magnétique supérieure horizontale, cette dernière étant interrompue par un entrefer comblé par un espaceur amagnétique, cet espaceur ayant une certaine longueur L et une certaine largeur e, cette tête étant caractérisée par le fait qu'elle comporte en outre un élément magnétorésistant ayant la forme d'un ruban placé sous l'espaceur et ayant une largeur égale à la largeur e de l'espaceur et une longueur l inférieure à la longueur L de l'espaceur, ce ruban étant relié à deux bornes de lecture, cette tête étant alors apte à lire une piste écrite sur une largeur l inférieure à la largeur L de la piste écrite.

De préférence, le ruban magnétorésistant de longueur l est relié à ses extrémités à deux bandes magnétorésistantes de grande surface orientées perpendiculairement au ruban, l'ensemble du ruban et des deux bandes formant un motif ayant sensiblement la forme d'un H, les bornes de lecture étant reliées à un contact pris sur ces bandes.

Dans une variante avantageuse, la tête est à la fois apte à écrire et à lire. Elle comprend alors un bobinage conducteur entourant les deux plots verticaux et réuni à deux bornes d'écriture.

La présente invention a également pour objet un procédé de réalisation de la tête qui vient d'être définie. Selon ce procédé,
- on dépose dans un caisson gravé dans un substrat semi-conducteur une première couche magnétique horizontale,
- on forme deux plots verticaux aux extrémités de cette couche,
- on dépose une couche mince de matériau magnétorésistant,
- on dépose une couche isolante diélectrique,
- on forme un espaceur amagnétique sur l'ensemble, cet espaceur ayant une longueur L et une épaisseur e,
- on grave la couche isolante et la couche de matériau magnétorésistant à travers un masque constitué de deux bandes paralléles séparées l'une de l'autre par un intervalle l inférieur à la longueur L de l'espaceur, ce masque étant placé au-dessus de l'espaceur et en travers de celui-ci et chevauchant ses deux extrémités, cet espaceur servant ainsi également de masque sur une longueur l, la couche de matériau magnétorésistant surmontée de la couche d'isolant diélectrique subsistant après gravure le long d'un ruban de longueur l et de largeur e, sous l'espaceur, et sous forme de deux bandes latérales aux extrémités du ruban, l'ensemble formant un motif ayant sensiblement la forme d'un H dont la barre centrale est autoalignée avec l'espaceur,
- on prend deux contacts électriques sur la couche en matériau magnétorésistant à travers la couche d'isolant diélectrique sur les deux bandes latérales et l'on relie ces deux contacts à deux bornes de lecture,
- on complète le circuit magnétique par le dépôt d'une couche magnétique horizontale de part et d'autre de l'espaceur et en contact avec les plots.

De toute façon, les caractéristiques de l'invention apparaîtront mieux à la lumière de la description qui suit, d'exemples de réalisation donnes à titre explicatif et nullement limitatif. Cette description se réfère à des dessins annexés sur lesquels :
- la figure 1, déjà décrite, montre une tête magnétique horizontale selon l'art antérieur,
- la figure 2, déjà décrite, montre une tête de lecture à magnétorésistance, selon l'art antérieur,
- la figure 3, déjà décrite, montre une tête de lecture en couches minces à deux magnétorésistances,
- la figure 4, déjà décrite, représente une magnétorésistance avec son vecteur aimantation,
- la figure 5, déjà décrite, illustre les variations relatives de résistance en fonction du basculement de l'aimantation,
- la figure 6 montre ces mêmes variations sous application d'un champ permanent,
- la figure 7 montre une première étape d'un procédé de réalisation de la tête de l'invention,
- la figure 8 montre une deuxième étape du procédé de l'invention,
- la figure 9 montre un masque utilisé pour graver la couche magnétorésistante,
- la figure 10 montre le motif magnétorésistant obtenu,
- la figure 11 montre, en coupe, la tête obtenue selon l'invention,
- la figure 12 montre, en vue de dessus, ladite tête,
- la figure 13 représente les lignes du champ de polarisation au voisinage de l'élément magnétorésistant,
- la figure 14 montre l'orientation générale de l'induction dans la bande magnétorésistante,
- la figure 15 montre le schéma électrique équivalent des moyens de lecture et d'écriture,
- la figure 16 montre une piste avec sa zone d'écriture et sa zone de lecture.

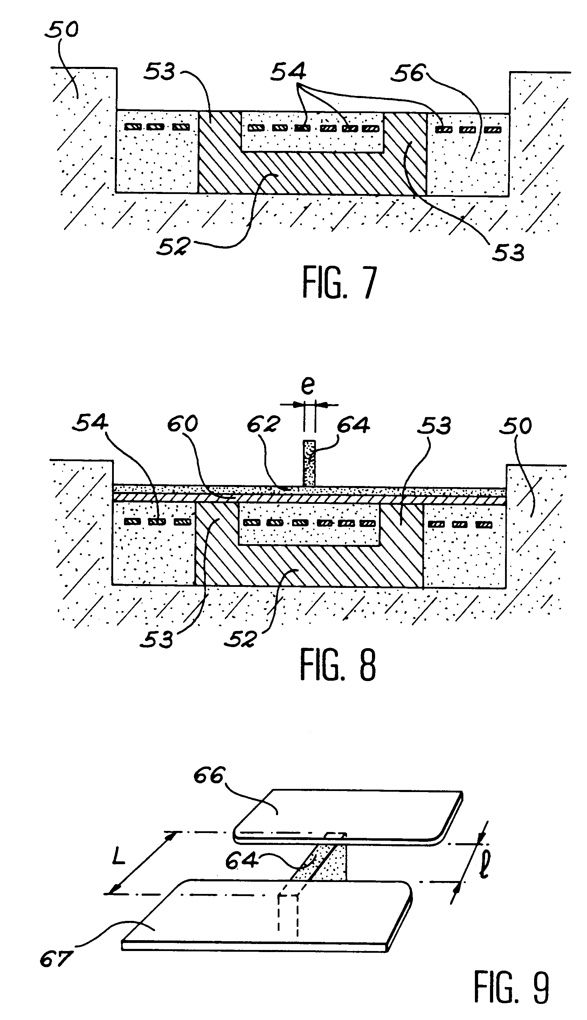

Sur la figure 7 est représenté un substrat semi-conducteur 50, par exemple en silicium, dans lequel a été gravé un caisson. Comme décrit dans le document EP-A-262 028, on fait croître dans ce caisson, par électrolyse, une couche magnétique horizontale 52 prolongée par deux plots verticaux 53. On forme ensuite un bobinage 54 entourant les plots 53, ce bobinage étant noyé dans une couche isolante 56. A ce stade, le dispositif obtenu est conforme aux dispositifs de l'art antérieur (cf figure 5g du document européen cité).

Dans le caisson ainsi préparé, on dépose alors une couche mince 60 de matériau magnétorésistant. Ce matériau peut être du fer-nickel ou tout autre matériau connu. L'épaisseur de la couche peut être comprise entre 50 et 200 nm. On dépose ensuite une couche mince en diélectrique 62, par exemple en silice.

On réalise ensuite un espaceur amagnétique 64 sur l'ensemble (figure 8). Il est inutile de décrire les opérations de réalisation de cet espaceur puisqu'elles sont bien connues de l'homme de l'art et décrites notamment dans les documents de brevet déjà cités EP-A-262 028 (ou son correspondant américain US-A-4,837,924) et EP-A-284 495. L'espaceur obtenu a une longueur L et une épaisseur e.

L'opération qui suit est une opération de gravure nécessitant un masque ayant la forme représentée sur la figure 9. Ce masque comprend deux bandes parallèles 66, 67 séparées l'une de l'autre par un intervalle l, inférieur à la longueur L de l'espaceur. Ce masque est placé au-dessus de l'espaceur 64 et chevauche celui-ci à ses deux extrémités.

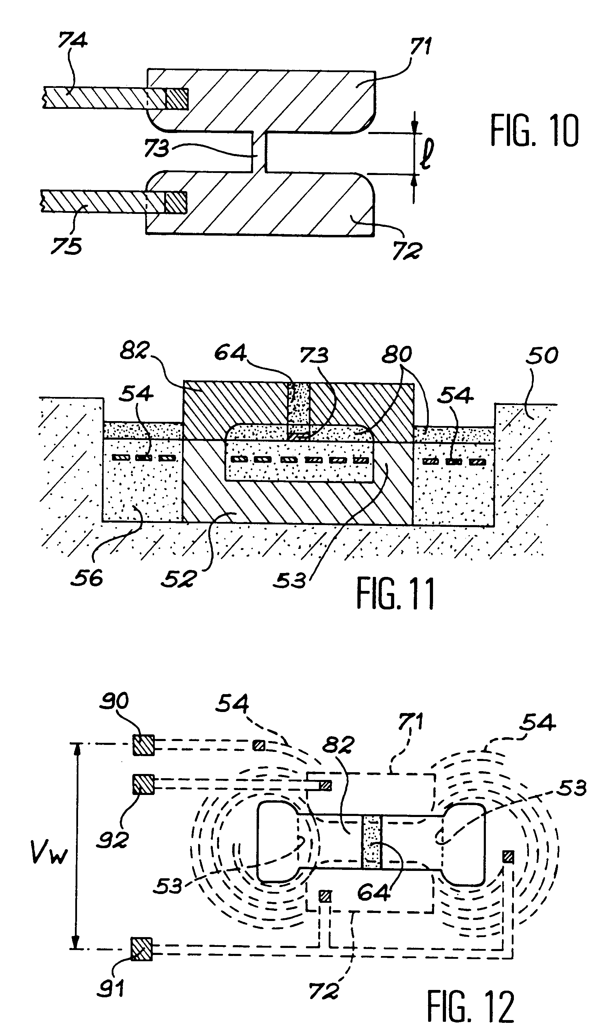

A travers ce masque, on grave la couche diélectrique 62 et la couche magnétorésistive 60, le mur 64 servant lui aussi de masque. La gravure peut être chimique ou ionique réactive. Il reste après gravure un motif représente sur la figure 10 en forme de H avec deux bandes latérales 71 et 72 et une bande centrale 73 de longueur l. Par construction même, cette bande centrale est autoalignée avec l'espaceur 64 et sa longueur est légèrement inférieure à celle de l'espaceur.

Deux contacts électriques 74 et 75 sont alors pris sur la couche magnétorésistante 60, à travers la couche diélectrique 62. Ces contacts sont pris sur les deux bandes latérales 71, 72, le plus loin possible de l'élément central 73 pour ne pas en perturber son fonctionnement.

Le procédé se poursuit selon la figure 11 par le dépôt d'une couche isolante 80, par exemple en silice, d'épaisseur égale à celle de l'empilement 60, 62, puis par le dépôt d'une couche magnétique horizontale supérieure 82, de part et d'autre de l'espaceur 64 et en contact avec les plots 53.

La figure 12 montre le dispositif obtenu en vue de dessus. Cette figure fait apparaître les connexions d'écriture 90, 91 reliées au bobinage conducteur 54 et les connexions de lecture 91, 92 reliées au motif magnétorésistant. On observera que, dans le mode de réalisation illustré, la connexion 91 est commune à l'écriture et à la lecture.

Les bandes magnétorésistantes 71 et 72 et/ou les plots 53 sont profilés pour ne pas venir en contact l'un avec l'autre. Dans le mode de réalisation illustré, les bords intérieurs des bandes 71 et 72 sont légèrement arrondis, ce qui peut être obtenu en donnant au masque de gravure la forme correspondante (cf figure 9).

Le fonctionnement de la tête ainsi obtenue est alors le suivant.

A l'écriture, la tête fonctionne normalement par alimentation du bobinage 54 à l'aide des connexions 90, 91. La tête est capable d'écrire sur une piste dont la largeur est égale à L, longueur de l'espaceur 64.

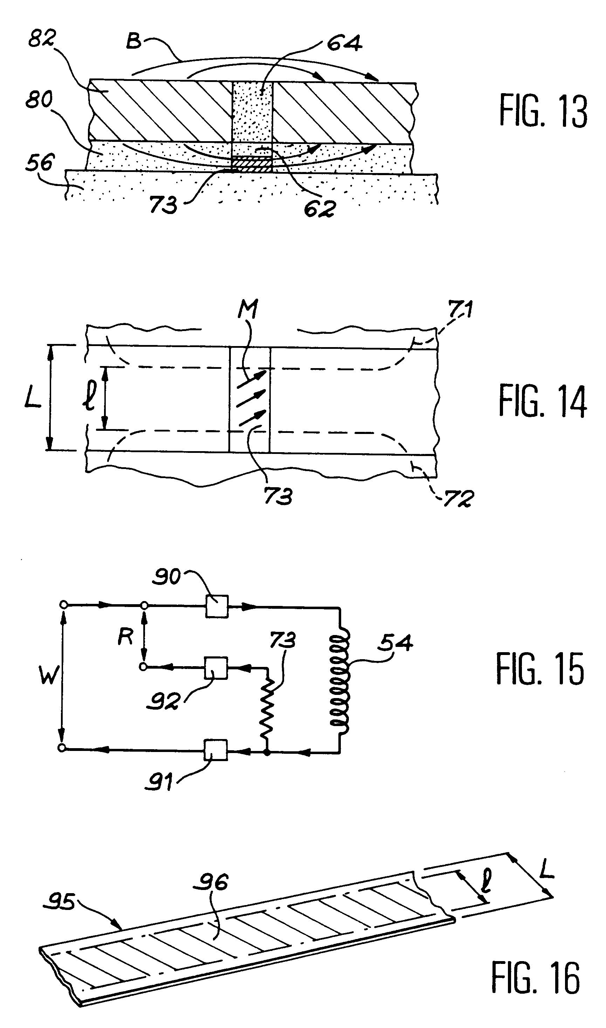

A la lecture, on excite ce même bobinage par un courant très faible, juste nécessaire pour faire tourner l'aimantation M de la bande magnétorésistante 73 de 45° par rapport à la direction d'aimantation au repos. La figure 13 montre le champ de fuite produit au niveau de l'entrefer et en particulier à l'arrière de celui-ci et le couplage magnétique avec la couche 73. La figure 14 montre l'orientation résultante de l'induction M. Cette aimantation tournera de + α ou de - α, selon le sens de l'aimantation longitudinale enregistrée sur la piste passant devant l'entrefer. Il en résultera une variation de résistance ΔR conformément au mécanisme rappelé plus haut en liaison avec la figure 6.

Sur la figure 15, on voit que le courant de lecture venant polariser l'élément magnétorésistant circule à travers les connexions 90, 92. Le courant d'écriture circule, lui, à travers les connexions 90 et 91. On a donc bien un signal de lecture R et un signal d'écriture W.

A la lecture, seule la bande 73 sera sensible aux informations enregistrées magnétiquement. En effet, la densité de courant de lecture dans les deux bandes latérales 71 et 72 reste faible. De plus, ces bandes ayant des dimensions nettement plus grandes que celles des bits d'information elles ne peuvent distinguer ceux-ci. De ce fait, la tête ne lira pas les informations écrites sur des pistes adjacentes à la piste lue.

Par ailleurs, le fait que la bande centrale 73 soit gravée dans la même couche magnétique 60 que les deux bandes latérales, assure une excellente continuité magnétique dans la couche mince magnétorésistante, notamment en ce qui concerne les domaines magnétiques dans la bande centrale 73.

Il faut observer que le mode de fonctionnement qui vient d'être décrit n'est pas le seul. L'orientation de l'aimantation de la couche magnétoristante à 45° au repos peut être obtenue du fait d'une anisotropie magnétocristalline induite, si le couplage magnétostatique est suffisamment fort entre l'élément magnétorésistant et les pièces polaires pour réduire les champs démagnétisants de l'élément magnétorésistant. Dans ce cas, il n'est plus besoin de bobinage conducteur. La tête est alors une tête de lecture seule.

Enfin, comme il apparaît clairement sur la figure 13, la bande magnétorésistante 73 est totalement enterrée dans la structure, à quelques microns sous le plan de vol. De ce fait, l'élément magnétorésistant est bien protégé de la corrosion, des chocs, etc...

Enfin, la figure 16 montre une piste 95 écrite sous une largeur L et lue sur sa partie centrale 96, de largeur l.

## Revendications

1. Tête magnétique de lecture comprenant un circuit magnétique composé d'une couche magnétique inférieure horizontale (52) prolongée par deux plots verticaux (53), une couche magnétique supérieure horizontale (82) interrompue par un entrefer comblé par un espaceur amagnétique (64), cet espaceur ayant une certaine longueur L et une certaine largeur e, cette tête étant caractérisée par le fait qu'elle comporte en outre un élément magnétorésistant ayant la forme d'un ruban magnétorésistant (73) placé sous l'espaceur (64) et ayant une largeur égale à la largeur e de l'espaceur et une longueur l inférieure à la longueur L de l'espaceur, ce ruban étant relié à deux bornes de lecture (74, 75), cette tête étant alors apte à lire une piste (96) écrite sur une largeur l inférieure à la largeur L de la piste écrite.

2. Tête magnétique selon la revendication 1, caractérisée par le fait que le ruban magnétorésistant (73) de longueur l est relié à ses extrémités à deux bandes magnétorésistantes de grande surface (71, 72) orientées perpendiculairement au ruban, l'ensemble du ruban et des deux bandes formant un motif magnétorésistant ayant sensiblement la forme d'un H, les bornes de lecture (74, 75) étant reliées respectivement à un contact pris sur ces bandes.

3. Tête magnétique selon la revendication 1, caractérisée par le fait qu'elle comprend en outre, pour l'écriture sur une piste (95) de largeur L, un bobinage conducteur (54) entourant les deux plots verticaux et réuni à deux bornes d'écriture (90, 91).

4. Tête magnétique selon la revendication 3, caractérisée par le fait que l'une des bornes d'écriture (91) reliées au bobinage est confondue avec l'une des bornes de lecture (75) reliées au ruban magnétorésistant.

5. Procédé de réalisation d'une tête magnétique d'écriture et de lecture conforme à la revendication 1, dans lequel
- on dépose dans un caisson gravé dans un substrat semi-conducteur (50) une première couche magnétique horizontale (52) avec deux plots verticaux (53),
- on dépose une couche mince de matériau magnétorésistant, (60),
- on dépose une couche isolante diélectrique (62),
- on forme un espaceur amagnétique (64) sur l'ensemble, cet espaceur ayant une longueur L et une épaisseur e,
- on grave la couche isolante (62) et la couche de matériau magnétorésistant (60) à travers un masque constitué de deux bandes parallèles (66, 67) séparées l'une de l'autre par un intervalle l inférieur à la longueur L de l'espaceur (64), ce masque étant placé au-dessus de l'espaceur (64) et en travers de celui-ci et chevauchant ses deux extrémités, cet espaceur (64) servant ainsi également de masque sur une longueur l, la couche de matériau magnétorésistant (60) surmontée de la couche d'isolant diélectrique (62) subsistant après gravure le long d'un ruban (73) de longueur l et de largeur e, sous l'espaceur (64), et sous forme de deux bandes latérales (71, 72) aux extrémités du ruban (73), l'ensemble formant un motif ayant sensiblement la forme d'un H dont la barre centrale (73) est autoalignée avec l'espaceur,
- on prend deux contacts électriques (74, 75) sur la couche en matériau magnétorésistant (60) à travers la couche d'isolant diélectrique (62) sur les deux bandes latérales (71, 72) et l'on relie ces deux contacts à deux bornes de lecture (91, 92),
- on complète le circuit magnétique par le dépôt d'une couche magnétique horizontale (82) de part et d'autre de l'espaceur (64) en contact avec les plots (53).

6. Procédé selon la revendication 5, caractérisé par le fait qu'on constitue en outre un bobinage électrique (54) entourant les deux plots et on relie ce bobinage à deux bornes d'écriture (90, 91).

## Claims

1. Magnetic reading head having a magnetic circuit constituted by a lower, horizontal magnetic layer (52) extended by two vertical connectors (53), an upper, horizontal magnetic layer (82) interrupted by an air gap filled an amagnetic spacer (64), the latter having a certain length (L) and a certain width e, said head being characterized in that it also comprises a magnetoresistant element in the form of a magnetoresistant ribbon (73) placed beneath the spacer (64) and having a width equal to the width e of the spacer and a length l less than the length L of the spacer, said ribbon being connected to two reading terminals (74,75), said head then being able to read a track (96) written over a width l less than the width L of the written track.

2. Magnetic head according to claim 1, characterized in that the magnetoresistant ribbon (73) of length l is connected at its ends to two large surface magnetoresistant strips (71,72) oriented perpendicular to the ribbon, the assembly of the ribbon and the two strips forming a substantially H-shaped magnetoresistant pattern, the reading terminal (74,75) being respectively connected to a contact made of these strips.

3. Magnetic head according to claim 1, characterized in that it also comprises for writing on a track (95) of width L, a conductor coil (54) surrounding the two vertical connectors and joined to two writing terminals (90,91).

4. Magnetic head according to claim 3, characterized in that one of the writing terminals (91) connected to the coil coincides with the one of the reading terminals (75) connected to the magnetoresistant ribbon.

5. Process for producing a magnetic reading and writing head according to claim 1, wherein in a recess etched in a semiconductor substrate (50) is deposited a first horizontal, magnetic layer (52), two vertical connectors (53) being formed at the ends of said layer, a magnetoresistant material layer (60) is deposited, a dielectric insulating layer (62) is deposited, an amagnetic spacer (64) is formed on the assembly, said spacer having a length L and a width e, the insulating layer (62) and the magnetoresistant material layer (60) are etched through a mask constituted by two parallel strips (66,67) separated from one another by a space l smaller than the length L of the spacer (64), said mask being placed above the spacer (64) and through the same and so as to overlap its two ends, said spacer (64) consequently also serving as a mask over a length l, the magnetoresistant material layer (60) surmounted by the dielectric insulating layer (62) remaining after etching along a ribbon (73) of length l and width e, beneath the spacer (64) and in the form of two lateral strips (71,72) at the ends of the ribbon (73), so that the assembly forms a pattern essentially having a H shape, whose central bar (73) is self-aligned with the spacer, the two electric contacts (74,75) are made on the magnetoresistant material layer (60) through the dielectric insulating layer (62) on the two lateral strips (71,72) and said two contacts are connected to two reading terminals (91,92) and the magnetic circuit is completed by the deposition of a horizontal magnetic layer (82) on either side of the spacer (64) and in contact with the connectors (53).

6. Process according to claim 5, characterized in that an electric coil (54) is formed surrounding the two connectors and said coil is connected to the two reading terminals (90,91).

## Patentansprüche

1. Magnetkopf, umfassend einen Magnetkreis, zusammengesetzt aus einer unteren horizontalen Magnetschicht (52), verlängert durch zwei vertikale Stufen (53), einer oberen horizontalen Magnetschicht (82), unterbrochen durch einen Spalt, ausgefüllt durch einen nichtmagnetischen Spacer (64), der eine gewisse Länge L und eine gewisse Breite e aufweist, wobei dieser Kopf **dadurch gekennzeichnet** ist, daß er außerdem ein magnetoresistentes Element umfaßt, das die Form eines magnetorestistenten Bandes (73) aufweist, angeordnet unter dem Spacer (64), das eine Breite gleich der Breite e des Spacers hat und eine Länge l kleiner als die Länge L des Spacers, wobei dieses Band verbunden ist mit zwei Lese-Anschlußklemmen (74, 75), womit dieser Kopf imstande ist, eine geschriebene Spur (96) über eine Breite l zu lesen, die kleiner ist als die Breite L der geschriebenen Spur.

2. Magnetkopf nach Anspruch 1, dadurch gekennzeichnet, daß das magnetorestistente Band (73) der Länge l mit seinen Enden verbunden ist mit zwei magnetoresistenten Streifen mit großer Fläche (71, 72), die senkrecht ausgerichtet sind zum Band, wobei die aus dem Band und den beiden Streifen gebildetet Einheit im wesentlichen ein magnetorestistentes Muster mit der Form eines H bildet, wobei die Lese-Anschlußklemmen (74, 75) jeweils verbunden sind mit einem Kontakte, hergestellt auf diesen Streifen.

3. Magnetkopf nach Anspruch 1, dadurch gekennzeichnet, daß er außerdem für das Lesen auf einer Spur (95) der Breite L eine leitendende Wicklung (54) umfaßt, die beiden vertikalen Stufen umgebend und verbunden mit zwei Schreib-Anschlußklemmen (90, 91).

4. Magnetkopf nach Anspruch 3, dadurch gekennzeichnet, daß eine der mit der Wicklung verbundenen Schreib-Anschlußklemmen (91) zusammenfällt mit einer der mit dem magnetoresistenten Band verbundenen Lese-Anschlußklemmen (75).

5. Herstellungsverfahren eines Schreib- und Lesemagnetkopfes nach Anspruch 1, bei dem
- man in einer in ein Halbleitersubstrat (50) geätzten Senke eine erste horizontale magnetische Schicht (52) mit zwei vertikalen Stufen (53) abscheidet,
- man eine dünne Schicht aus magnetoresistentem Material abscheidet (60),
- man eine dielektrische Isolierschicht (62) abscheidet,
- man auf dem Aufbau einen nichtmagnetischen Spacer (64) bildet, wobei dieser Spacer eine Länge L und eine Dicke e hat,
- man die Isolierschicht (62) und die Schicht aus magnetoresistentem Material (60) durch eine Maske ätzt, die gebildet wird durch zwei parallele Streifen (66, 67), voneinander getrennt durch einen Zwischenraum l, kleiner als die Länge L des Spacers (64), wobei diese Maske angeordnet ist über dem Spacer (64) und quer zu diesem und seine beiden Enden überlappend, wobei dieser Spacer (64) somit über eine Länge l auch als Maske dient, wobei die Schicht aus magnetoresistentem Material (60), überdeckt von der dielektrischen Isolierschicht (62), die nach der Ätzung noch längs eines Bandes (73) der Länge l und der Breite e vorhanden ist, unter dem Spacer (64) und in Form von zwei Seitenstreifen (71, 72) an den Enden des Bandes (73), wobei der Aufbau ein Muster bildet, das im wesentlichen die Form eines H aufweist, dessen Mittelsteg (73) mit dem Spacer selbstausgerichtet ist,
- man auf der Schicht aus magnetoresistentem Material (60) zwei elektrische Kontakte (74, 75) herstellt, durch die dielektrische Isolierschicht (62) auf den beiden Seitenstreifen (71, 72), und man diese beiden Kontakte verbindet mit zwei Lese-Anschlußklemmen (91, 92),
- man den Magnetkreis vervollständigt durch die Abscheidung einer horizontalen Magnetschicht (82) beiderseits des Spacers (64), in Kontakt mit den Stufen (53).

6. Verfahren nach Anspruch 5, dadurch gekennzeichnet, daß man außerdem eine elektrische Wicklung (54) bildet, die die beiden Stufen umgibt, und man diese Wicklung verbindet mit zwei Schreib-Anschlußklemmen (90, 91).
